# EUROPEAN PATENT SPECIFICATION

(11) **EP 2 379 420 B1**
(45) Date of publication and mention of the grant of the patent: **28.10.2015**
(21) Application number: 09825568.0
(22) Date of filing: 09.11.2009
(51) Int. Cl.: B65D 33/38, B65D 1/02, B65D 75/32, B65D 77/06, B65D 75/58

(54) **THERMOFORMED LIQUID-HOLDING VESSELS**
WÄRMEGEFORMTE FLÜSSIGKEITSAUFNAHMEGEFÄSSE
CUVES CONTENANT UN LIQUIDE THERMOFORMÉES

(30) Priority: 10.11.2008 US 113171 P
(43) Date of publication of application: 26.10.2011
(73) Proprietor: Eco.logic Brands, Oakland, CA 94610 (US)
(72) Inventor: CORBETT, Julie, Oakland CA 94610 (US); GRAHAM, Romeo, Chelsea QC J9B 1V4 (CA); WATTERS, Robert, Ottawa ON K2A 1X6 (CA); SIROIS, Michael, Ottawa ON K1Y 3R9 (CA)
(74) Representative: D Young & Co LLP
(86) International application number: PCT/US2009/063756
(87) International publication number: WO 2010/054334

(56) References cited:
- EP-A1- 0 642 979
- EP-A1- 1 036 739
- EP-A1- 1 739 025
- WO-A1-97/46465
- WO-A1-2005/037675
- WO-A1-2007/066090
- WO-A1-2007/126044
- WO-A1-2008/062042
- DE-U1-202004 010 291
- DE-U1-202005 020 697
- KR-Y1- 200 379 463
- US-A- 3 468 224
- US-A- 3 567 104
- US-A- 4 325 905
- US-A- 5 257 865
- US-A1- 2006 062 497

## Description

### BACKGROUND OF THE INVENTION

Packaging used for containment of liquids can generate large amounts of waste. In some cases, packaging used for containing liquids can be recycled. Packaging used for containing liquids has been described in PCT Publication No. WO 2007/066090.

Current methods of preparing liquid-holding vessels use a film that is heat-sealed onto itself and with a fitment. Methods of preparing other types of liquid vessels have been described (see e.g. U.S. Patent Publication No. 2007/0211967, U.S. Patent No. 4,817,830, U.S. Patent No. 4,837,849 and U.S. Patent No. 4,838,429). This gives the vessel a flat or pillow shape but in order to add shape and structure, extra materials are added to the bottom or sides of the vessel, which can add both materials and cost. DE202004010291 describes a packaging container made of cardboard for solid and liquid substances. WO2008062042 describes a fluid container having at least one deep-drawn part. EP0642979 describes a bottle-like plastic container consisting of two container parts which are welded together. US4325905 describes a double-walled paper container. WO2005037675 describes a thermoformed container produced from plastic sheet material. Therefore, there is a need for improved liquid-holding vessels that use a reduced amount of materials and have a reduced negative impact on the environment.

### SUMMARY

The presently claimed subject matter is defined in the claims.

### BRIEF DESCRIPTION OF THE DRAWINGS

The features and advantages of the invention may be further explained by reference to the following detailed description and accompanying drawings that sets forth illustrative embodiments.
Figure 1 shows a liquid-holding vessel formed by two pieces of thermoformed plastic.
Figure 2 shows a liquid-holding vessel formed by two pieces of thermoformed plastic prior to attachment of a closure.
Figure 3 shows a liquid-holding vessel with full collapse prevention areas formed by two pieces of thermoformed plastic.
Figure 4 shows a liquid-holding vessel with grip areas formed by two pieces of thermoformed plastic prior to attachment of a closure.
Figure 5 shows a thermoformed liquid-holding vessel coupled to a skeleton around a base area of the vessel.
Figure 6 shows a thermoformed liquid-holding vessel coupled to a skeleton around a mid-section of the vessel.
Figure 7 illustrates a process for forming a liquid-holding vessel from two thermoformed parts.
Figure 8 illustrates a process for folding of a thermoformed clamshell part into a liquid-holding vessel.
Figure 9 illustrates how multiple unsealed thermoformed plastic can be stacked in a nesting fashion for efficient shipping and handling.
Figure 10 illustrates how a partially sealed vessel can have one side of the vessel collapse onto the other side to be stacked in a nesting fashion for efficient shipping and handling.
Figure 11 shows an open edge of a liquid-holding vessel configured to accept a closure.
Figure 12 shows a long integrally-thermoformed spout.
Figure 13 shows an integrally-formed and sealed closure on a liquid-holding vessel.
Figure 14 shows a closure attached to the edge of a thermoformed film part.
Figure 15 shows a closure attached to a face of a thermoformed film part.
Figure 16 shows a flowchart for forming a thermoformed liquid-holding vessel.
Figure 17 shows an example of a thermoformed liquid-holding vessel.
Figure 18 shows an example of a thermoformed liquid-holding vessel.
Figure 19 shows an example of a thermoformed liquid-holding vessel with a central hole.
Figure 20 shows an example of a thermoformed liquid-holding vessel with a welded central portion.
Figure 21 shows an example of a thermoformed liquid-holding vessel enclosed in a skeleton.
Figure 22 shows an example of a thermoformed liquid-holding vessel formed by sealing nested thermoformed portions.
Figure 23 shows an example of a thermoformed liquid-holding vessel with a clam shell configuration.
Figure 24 shows a stack of thermoformed liquid-holding vessels.

### DETAILED DESCRIPTION OF THE INVENTION

While preferable embodiments of the invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention.

Described herein is a vessel having thermoformed film parts that can be heat-sealed, bonded, or welded together and attached with at least one closure in the form of a weldspout fitment. In another embodiment, described herein is a vessel having thermoformed film parts with an integrally thermoformed spout. Methods of assembling such vessels are also described. The vessels can be constructed from a thermoformed material and a closure. In another embodiment, the vessel can be constructed from the thermoformed material only. The vessel may be further supported by a structural skeleton. The container can be constructed from a thermoformed material, a closure, and/or a structural skeleton. In another embodiment, the container can be constructed from the thermoformed material and/or a structural skeleton. The vessel can be useful for holding liquids such as beverages and other fluids. Components of the vessel, including the thermoformed material, closure, and skeleton described herein can be interchanged or combined with various embodiments herein. Any of the aspects described herein can be combined with other vessel components known in the art.

A thermoforming process can include thermoforming, vacuum forming, twin sheet thermoforming, pressure forming or hot air blow forming of a film into a shaped and sculpted form. The form can be combined to create a vessel such as a liquid-holding vessel herein. A film used for thermoforming can be about 0.127mm (0.0005 inch) to about 1.016mm (0.040 inch) in thickness. Any thermoforming process known in the art can be used, for example those used for preparing bottles, bags, pouches, bladders, baby bottle liners, and related products (see e.g. U.S. Patent No. 6,050,432).

In some embodiments, the liquid in the vessel can be suitable for consumption by humans or other mammals. For example, the liquid can be a beverage that can either be carbonated or non-carbonated. The liquid can be dispensed from the vessel by pouring, sucking, squirting, or other means. The vessel can be chilled, frozen, microwaved, or boiled in water or other liquids. In another embodiment, the liquid in the vessel can be used for purposes other than human or mammal consumption. For example, the liquid can be an oil or other non-aqueous liquid. The liquid can be dispensed from the vessel by pouring, squirting, or other means. Uses and storage of the vessel can be dependent on the type or types of material used.

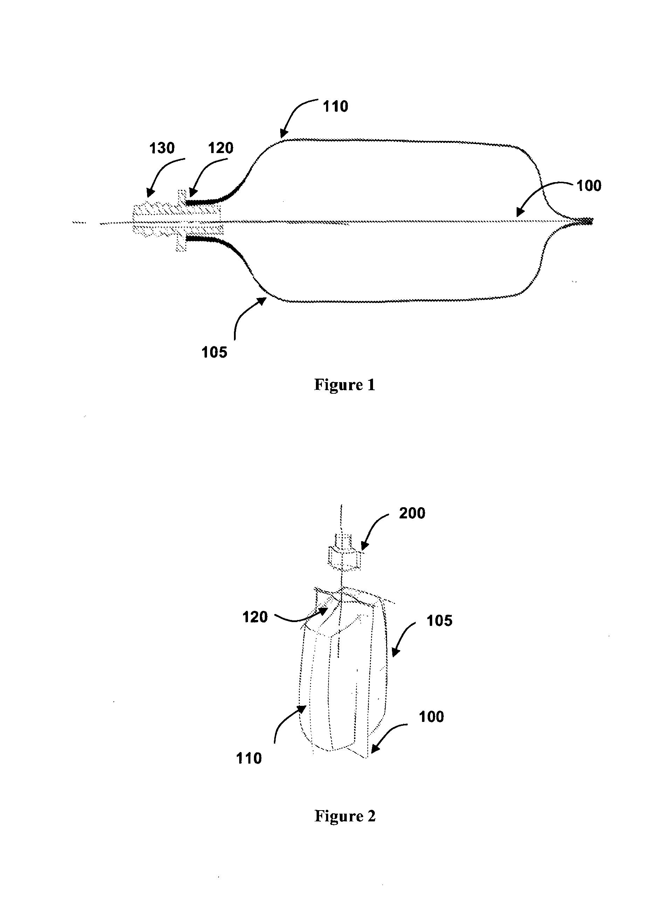

Referring to the drawings in detail, Fig. 1 shows a side view of a vessel for holding liquids. In one embodiment, the vessel can be assembled from a thermoformed film portion or part **110** that can be partially heat-sealed or welded and can be sealable to another thermoformed film portion or part **105,** producing a seam **100** along the perimeter of the two thermoformed portions or parts. Thermoforming the film parts can allow for a vessel body having a three-dimensional shape or form. One end of the partially sealed vessel may be opened and contain a neck area **120** configured to allow at least one closure in the form of a weldspout fitment **130** to be attached to the two ends of the thermoformed film parts **110, 105.** The two thermoformed film portions or parts **110, 105** can be identical or can be different. Fig. 1 also shows that the thickness of the film near the seam and site of closure attachment can be greater than the thickness of the film away from the seam. A thicker film at the seam and site of closure attachment allows to optimal sealing or welding performance while a thinner film away from the seam areas helps to reduce weight of the vessel. This variation in film thickness can be a result of the thermoforming process and can allow for reduced and/or more efficient material usage than existing pouch or bag forming technologies or processes. The variation can also allow for the volume to materials ratio of the vessels to be maximized. The vessel can be thermoformed to match the shape of the interior cavity of the outer skeleton to minimize materials used and maximize the capacity efficiency of the container.

Fig. 2 is a three-dimensional drawing showing how two thermoformed film parts **105,110** can be heat-sealed at the plastic perimeter **100** prior to attachment of the closure **200.** At one end, a neck area **120** with an opening between the film parts **105,110** can allow a closure in the form of a weldspout fitment to be attached.

### Thermoformed Features

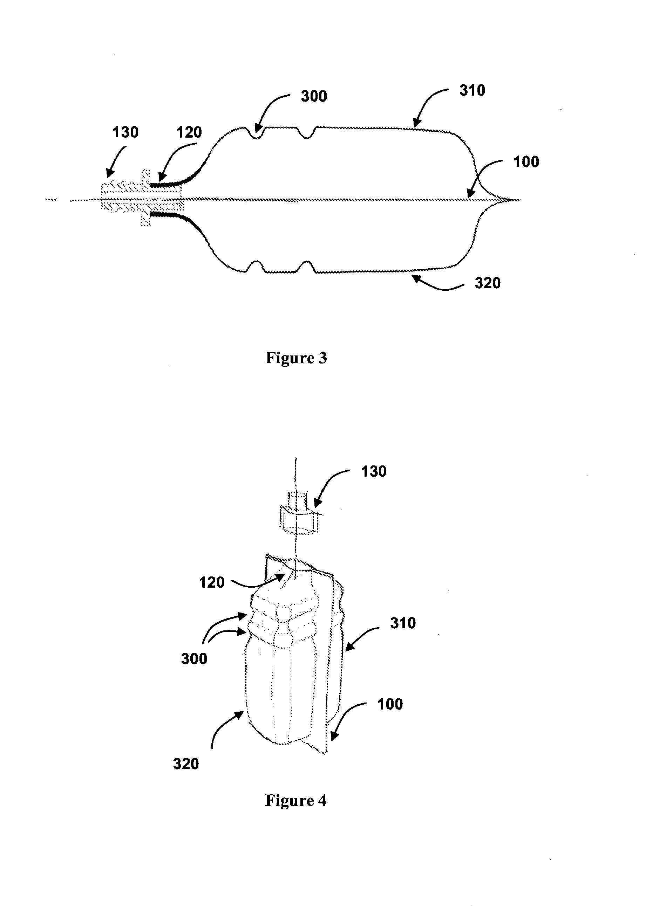

Certain areas of the thermoformed film parts can include features for performing a variety of functions. In some embodiments, grip areas for user interaction with the vessel can be incorporated into the surface of the film. In Fig. 3, shows a side view of a vessel assembled from thermoformed film parts **310, 320** that can be heat-sealed and form a seam **100.** The surface of the thermoformed film parts includes useful gripping features **300.** A closure **130** can be attached at the neck area **120** located around the opening. Fig. 4 is a three-dimensional drawing showing two thermoformed film parts **310,320** comprising gripping features **300** that have been heat-sealed at the plastic perimeter **100** prior to attachment of the closure **130** at the neck area **120** located around the opening.

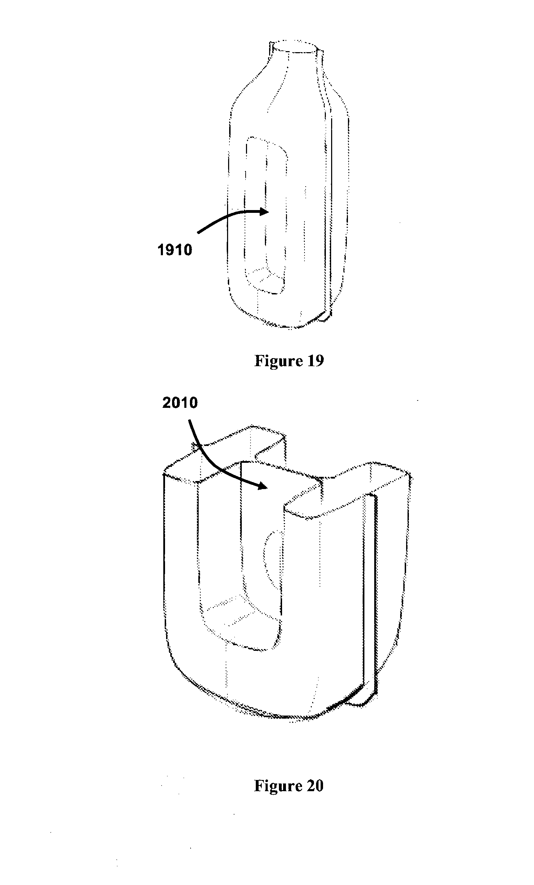

Additional thermoformed features include, but are not limited to, features for optimally interfacing with a closure in the form of a weldspout fitment, brand and/or graphics embossments, volume level and/or capacity information, and features useful for nesting and/or filling. Other useful features such as pleats, posts, bumps, dimples, ridges, contours, indentations, creases, folds, and the like can be utilized. These features can be used to register or couple the vessel to the inside of the skeleton or these features can be captured by the skeleton, thereby allowing the vessel to be supported by the skeleton structure. These features can assist in collapse of the vessel during emptying as well as to prevent full collapse during final stages of emptying, thereby avoiding a hydrostatic lock that can slow or prevent full evacuation of the enclosed fluid. A central web feature can be formed by heat-sealing or welding multiple formed surfaces together. The central web feature can be utilized to add structure and shape to the vessel, to add one or more gripping regions, holes, graphics, or other features known to one skilled in the art. For example, as shown in Fig. 19, a thermoformed vessel can have a donut-like hole **1910** through a central portion of the vessel. Alternatively, as shown in Fig. 20, the central portion **2010** of a liquid-holding vessel can be welded together.

### Structural Skeleton

The vessel can be housed by or interfaced to a structural chassis or skeleton (not shown), of varying shapes or profiles, to support the vessel. The shape of the thermoformed vessel can be designed to maximize the volume to material ratio of the interior cavity of the skeleton. The skeleton can also be used to support the vessel such that it can stand upright on its own or for ease of gripping by the user. The skeleton can comprise any structural body that provides support to the vessel or can be made of insulating material. The structural skeleton can prevent collapse of the vessel and resist side force on the container sufficient to allow the controlled dispensing of the liquid while being gripped by the user. The skeleton can comprise interlocking or interfacing features to enable secure connection to the liquid holding vessel. Various examples of skeleton structures have been described in co-pending applications (U.S. Patent No. 8,430,262).

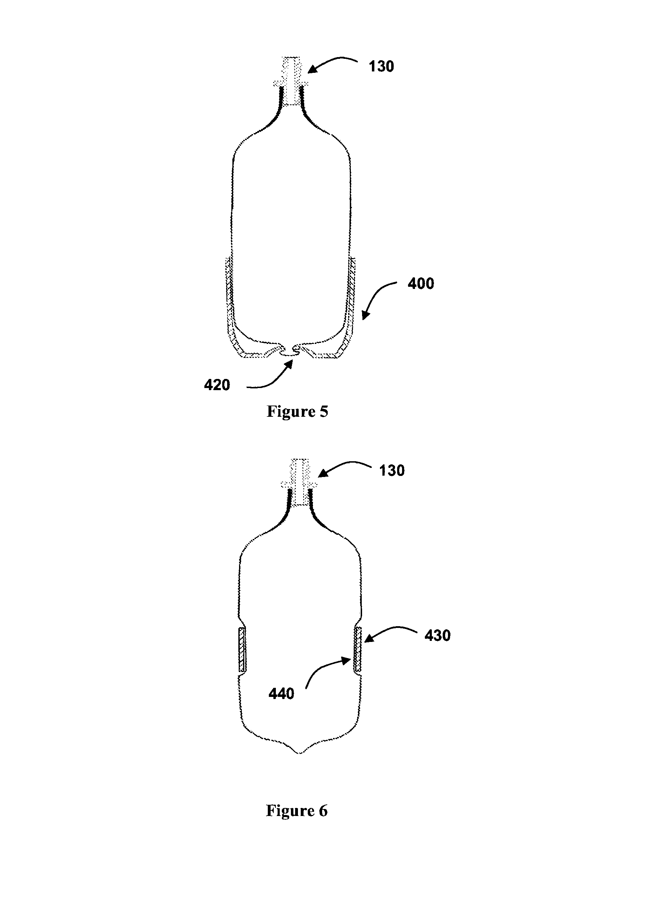

As shown in Fig.5, a thermoformed liquid-holding vessel attached to a closure **130** can be coupled to a skeleton **400** around the base seam **420** of the vessel. The skeleton can allow the vessel to stand upright and may enclose around a portion or substantially all of the vessel (not shown).

In another example, Fig. 6 shows a thermoformed liquid-holding vessel attached to a closure **130** can be coupled to a skeleton **430** around the mid-section **440** of the vessel. A mid-section skeleton can improve gripping of the vessel by the user, resist collapse when gripped, and/or be used to display a graphical design.

The material used for forming the skeleton need not be food-grade, as the liquid-holding vessel can prevent contact of any liquid contained within the liquid-holding vessel with the skeleton during storage of the liquid or during dispensing of the liquid. The skeleton can comprise biodegradable materials, such as molded fiber or pulp or paper. For example, the skeleton may comprise 100% post-consumer fiber or pulp feedstock. In another example, the skeleton may comprise 100% recycled corrugated fiberboard and newspaper. The skeleton can comprise type-3 thermoformed fiber, molded fiber, X-RAY formed fiber, infrared formed fiber, microwave formed fiber, vacuum formed fiber, structural fiber, sheet stock, recycled plastic or any other structural material. The skeleton can be formed from one or more sheets of material that can be laminated, folded or glued together. The sheets of material can comprise hinges, joints, creases, interlocks, flanges, or flaps for simplified folding of the sheets to form the skeleton. Any of the materials that may be used to form the skeleton may be used in any of the embodiments described herein. The skeleton assembly can also be made of molded plastic or metal, and be a reusable part that is able to accept thermoformed vessels with fitments or closures as refills. In this case, the vessel assembly can be recycled or disposed of.

### Vessel Assembly

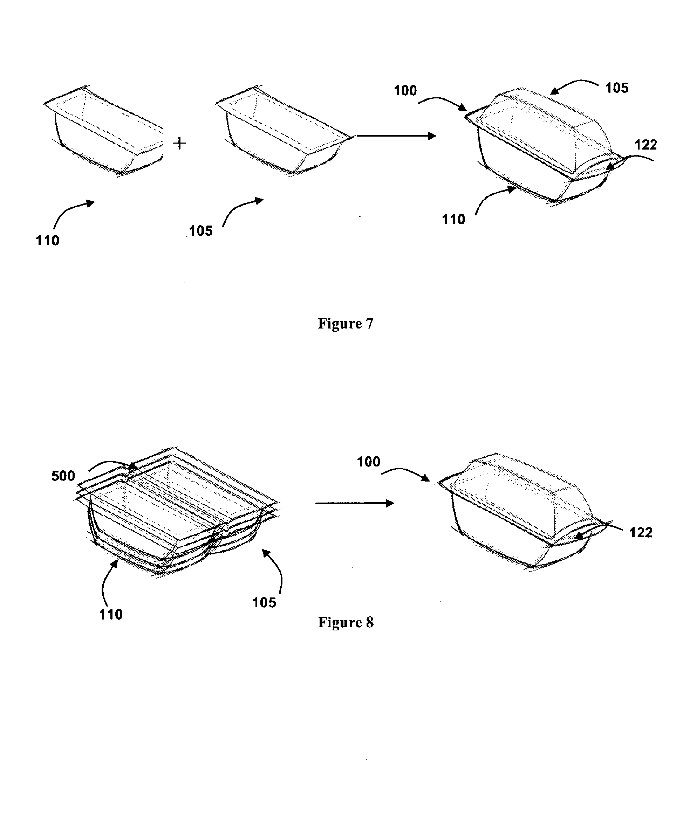

As shown in Fig. 7, individual thermoformed film parts **105, 110** can be sealed to form a partially closed vessel, sealed at the perimeter **100** with an opening **122** for attachment of a closure. In another embodiment, as shown in Fig. 8, the thermoformed film parts **105,110** can be made into a clamshell arrangement in which two individual thermoformed film parts **105, 110** can be made with a hinge region **500.** The clamshell thermoformed film parts can be folded together and sealed along the hinged region and/or the other edges to form a seam **100** with an opening **122** for attachment of a closure. Also illustrated on the left side of Fig. 8 is the nesting configuration for clamshell thermoformed parts. This can be useful for efficient packing, storage, and shipping.

The thermoformed vessel can be used the adhere to and form the two parts of the outer skeleton via heat sealing , ultrasonic and other methods and secure one portion of the skeleton to the other to create an enclosed and leak proof structure. In other instances, two open clam shells of the thermoformed vessel are open and inserted into the matching open outer skeleton and the two portions are closed and heart sealed together at the edges only so that the plastic material is used as a adhesive bond, forming simultaneously the connection to both the inside vessel and the outer skeleton at the edges. This bonded perimeter can be detailed to allow for easy separation of the two parts, vessel and skeleton, once the contents are consumed.

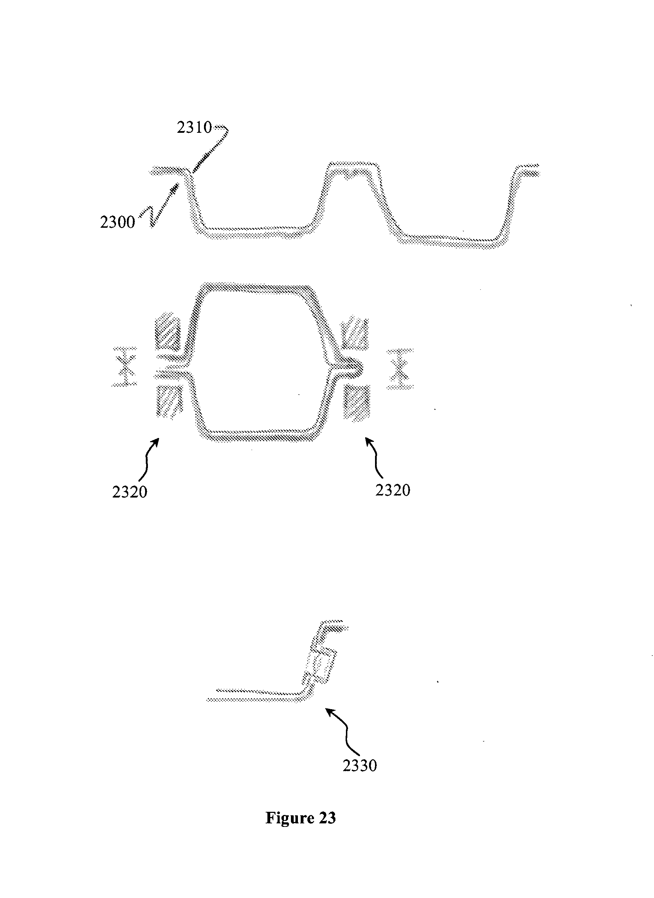

Fig. 23 shows an example of such a thermoformed vessel. For example, a pulp layer **2300** may be provided. The pulp layer may form an open clam shell. A film **2310** may be vacuum-formed over the pulp **2300** or a form-fitting thermoformed film inserted into the pulp. The clam shell may then be folded over and the edges may be heated and clamped **2320** to seal the package. Thus, the pulp shell may be closed (or two halves put together), and may be heated or ultra-sonically welded together using the film as a bond. Following that, a fitment **2330** may be loaded into the sidewall.

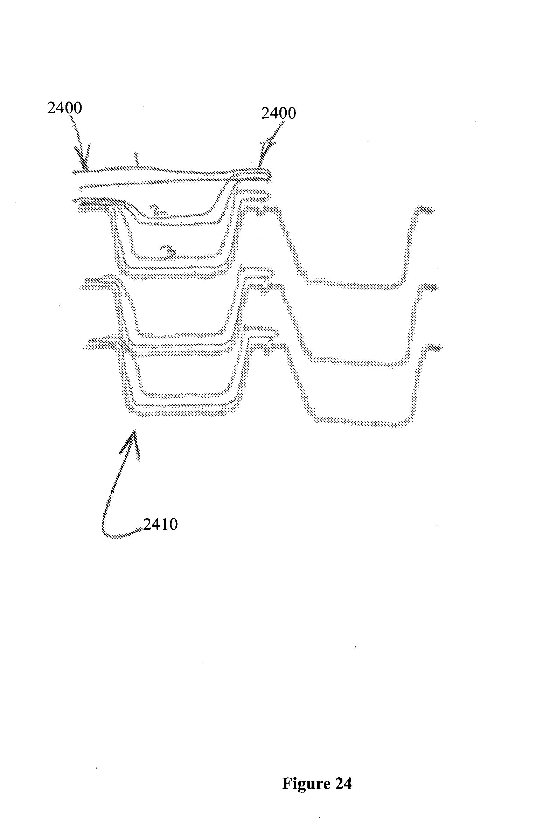

Fig. 24 shows a stack of clam shells. A film may be sealed to the pulp. The film may be thermo-formed film that may be sealed to pulp at the edges **2400.** In some embodiments, the film/seal may be provided to one side only **2410.** Thus, the film may be formed into a vessel and placed in a skeleton. The skeleton may be closed and the vessel may be permanently assembled with heat or ultrasonic weld with the film as a bond.

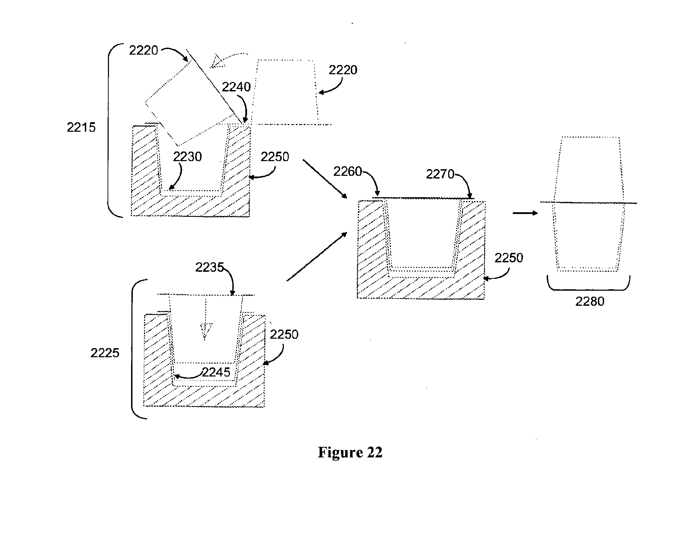

Fig. 22 shows a process that can simplify heat sealing. Two thermoformed parts or portions can be arranged in a nested position prior to a heat sealing operation. The can be performed either by hinged parts coming together or two individual parts being nested. In one embodiment, as shown in section **2215,** two thermoformed portions **2220** and **2230** are connected by an optional hinged portion **2240.** A first thermoformed portion **2230** can be placed in a thermoforming device **2250** and a second thermoformed portion **2220** can be folded or nested into the first thermoformed portion **2230** prior to a heat sealing step. Alternatively, as shown in section **2225,** the vessel may be formed of two thermoformed portions **2235** and **2245** that are not connected by a hinged portion. A first thermoformed portion **2245** can be placed in the thermoforming device **2250** and a second thermoformed portion 2235 can be placed inside the first thermoformed portion **2245.** In each case, **2215** or **2225,** the inner cavity dimension or portion, e.g. the second thermoformed portion, can be slightly offset from the outer portion, e.g. the first thermoformed portion, which can allow for efficient nesting. With the nested thermoformed volumes located out of the way in a retaining cavity/frame, only the edges to be sealed are exposed to the heat-sealing tooling. In some embodiments, nested thermoformed portions can be positioned inside a retaining cavity/frame of the thermoforming device, such that only the edges to be sealed are exposed to the heat-sealing tooling. This can keep the thermoformed portions out of a path for the heat-sealing tool or out of the way in the retaining cavity/frame of the thermoforming device. Certain edges can be selectively not sealed, leaving an opening for filling, closure, or attachment of a closure. As illustrated in Fig. 22, the vessel can be expanded at a later time, e.g. the time of use or when filled with fluid. The vessel can be expanded using application of air, use of machinery, or any other methods known to those skilled in the art.

### Package and Storage of Thermoformed Film Parts

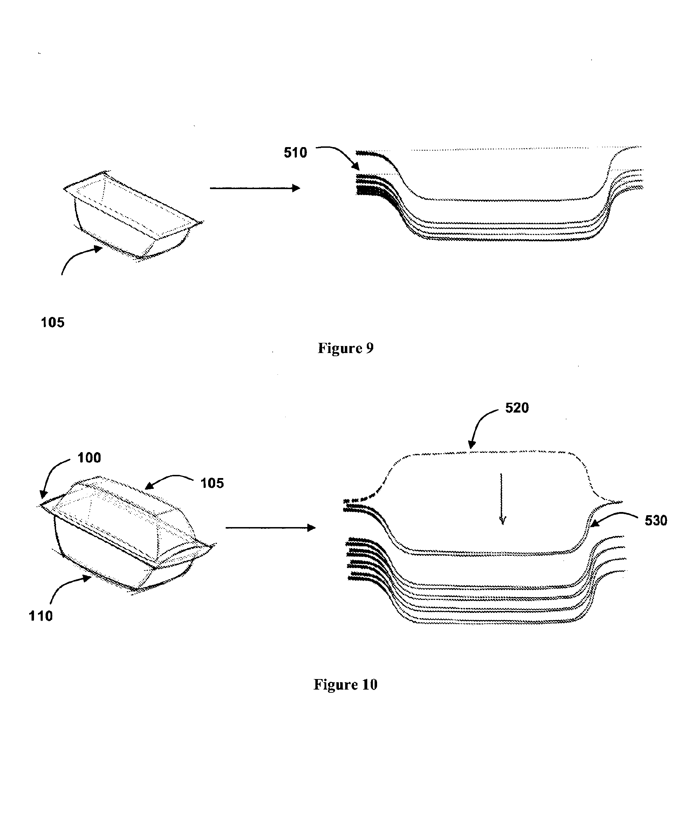

Fig. 9 illustrates how thermoformed film parts **105,** prior to being sealed and assembled into vessels, can be stacked in a nesting or nested fashion **510** for efficient packaging, storage volume, and shipping volume. This can be useful for improving production and handling of the thermoformed film parts. The neck area **120** of the opening **560** can be configured to accept a closure.

Fig. 10 illustrates how thermoformed film parts **105, 110,** following formation of the heat-seal **100,** can be stacked in a nesting fashion. A surface **520** of the vessel can be pushed inward and inverted to allow stacking in a nesting fashion for efficient packaging, storage volume, and shipping volume. This can be useful for improving production and handling of the vessels prior to attachment of the closure.

### Closures

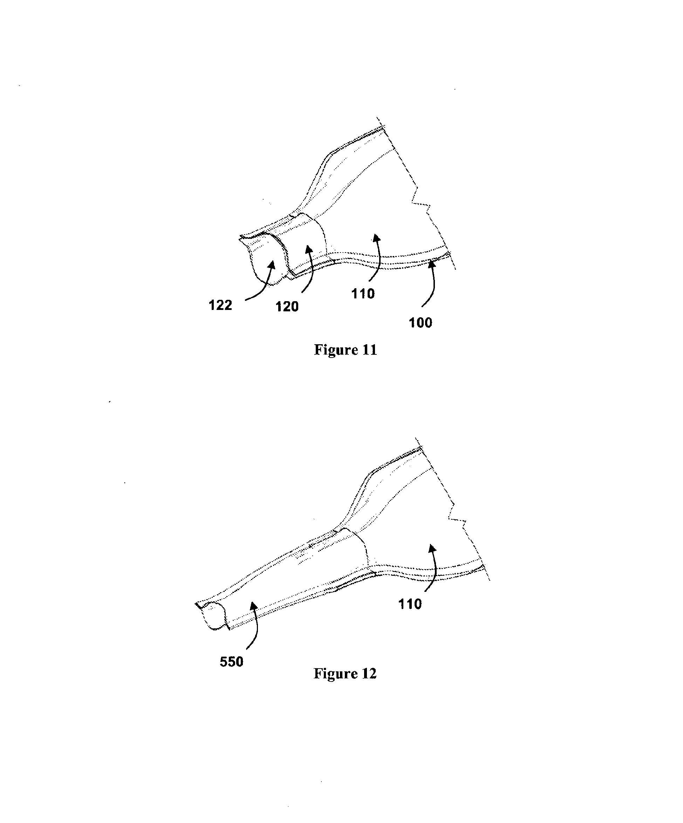

Preferably, the vessels can be configured for attachment to a closure. Various thermoformed features for accepting closures can be used. For example, Fig. 11 shows a top portion of a vessel with an opening **122** and a neck region **120.** The neck region can be formed from the same film that is used to form the thermoformed film part **110,** or can be a different film. The thermoformed film part **110** can be welded or heat-sealed to form a seam **100.** The opening **122** and/or the neck region **120** of the vessel can have thermoformed features. These features can be shaped to match the profile of a specific closure. In some embodiments, a resealable closure can be attached inside the sealed vessel at the opening.

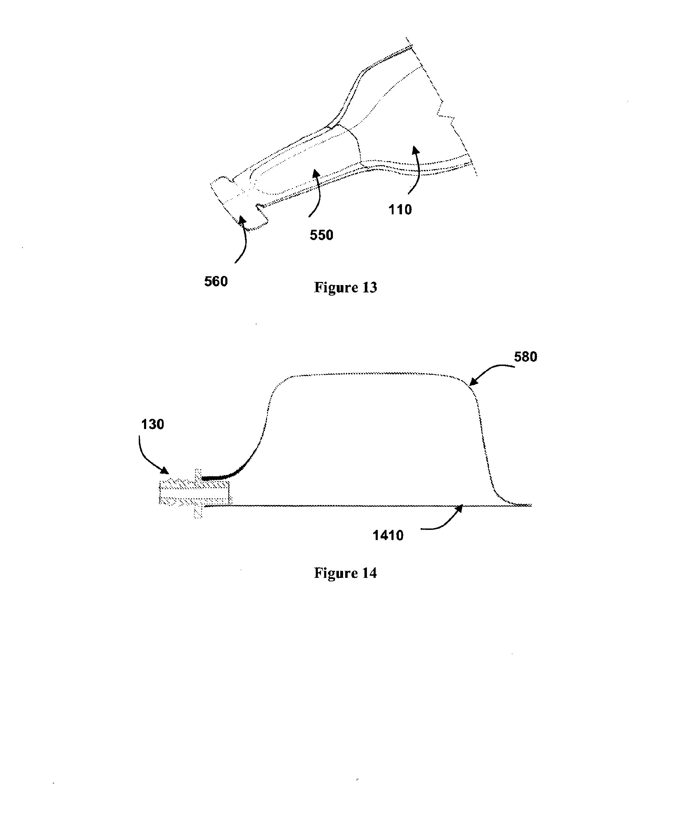

The vessels can have a thermoformed valve, spout, seal, closure, or the like. In Fig. 12, a thermoformed film part **110** has been configured with an elongated neck region **550.** The elongated neck region can be formed by extending the film part **110** or by attachment of a separate neck region to the film part **110.** Fig. 13 shows a thermoformed and heat-sealed closure that can have a one-time, tear-away edge **560.** The thermoformed and heat-sealed closure can be utilized as a tamper-evident seal. In some embodiments, a resealable closure positioned inside the thermoformed and heat-sealed closure can be exposed by breaking the tamper-evident seal. Other types of closures utilizing an elongated neck region known to one skilled in the art can be incorporated.

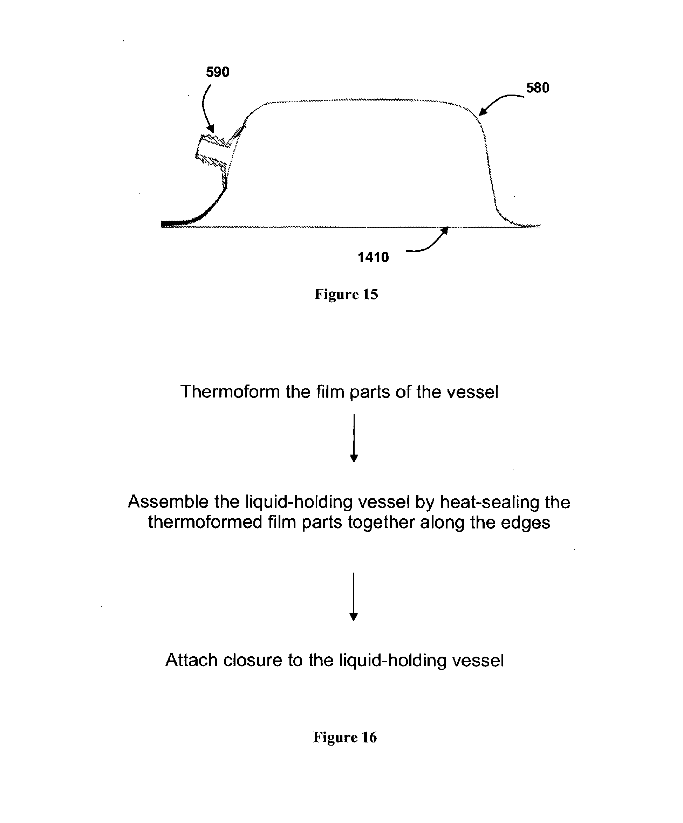

Closures can be sealed at various parts of the thermoformed film parts. In one embodiment shown in Fig. 14, a thermoformed film part **580** can be aligned with a closure in the form of a weldspout fitment **130** can be of an edge-sealing variety, in which it can be sealed along the open edge between one thermoformed part and a sheet film part **1410** or between two thermoformed parts (not shown). In other embodiments shown in Fig. 15, a closure in the form of a weldspout fitment **590** can be of a face-sealing variety where it can be attached along any face of the thermoformed part 580 or the sheet film part **1410.** The liquid-holding vessel can be formed using one thermoformed part and a second partially thermoformed part. Additionally, the liquid-holding vessel can be formed using one thermoformed part and one non-thermoformed part. Use of non-thermoformed parts can facilitate the application of a graphic, or simplify the manufacturing process.

A closure in the form of a weldspout fitment can be attached to an opening of the liquid-holding vessel to allow for reversible sealing of the vessel and dispensing of liquid from the liquid-holding vessel. The closure can be made from a polymer or any other liquid-impermeable material. The closure can include a one-piece, tamper-evident flip-top dispensing weldspout, which can be ideal for pouches containing liquids such as salad dressings. Another embodiment includes closures designed with a special child-safe configuration on a top portion. There are closures available for single-serve beverage vessels as an alternative to the traditional straw in which the closures break open for drinking and provide reclosability. The closure can comprise a cap that screws on and off, a flip-up cap, or a break-off cap that can be resealable or reclosable. Other types of closures include twist-lock closures or push-pull caps like those found in popular beverage and water bottles used during sports and exercise activities (see e.g. U.S. Patent Application Publication No. 2008/0185405). The neck region of the closure site of attachment can have an integrally-molded tamper-evident seal. The tamper evident seal can be a film covering the closure.

The closure is mechanically attached to an open end of a liquid-holding vessel through ultrasonic welding or heat sealing. In some embodiments, the closure can be sealed to the open end of the vessel by welding or heat-sealing.

### Methods for Vessel Assembly

Fig. 16 shows a flow chart of an assembly process for a thermoformed vessel. Film can be thermoformed into shaped parts for the vessel. Any process known in the art can be used to shape the film. After individual thermoformed film parts are made, one or more thermoformed film parts can be heat-sealed to form a partially closed vessel or a vessel body. The heat-sealing can be along an edge of the thermoformed film parts. A closure can be attached to the opening of the partially closed vessel or the vessel body to form a sealed vessel useful for holding liquids. In one embodiment, the closure can be attached prior to heat-sealing the one or more thermoformed film parts together. For example, a face-sealing closure, described herein, can be pre-attached to the thermoformed surface. In another embodiment, the closure can be attached during the heat-sealing step of the thermoformed film parts. In other embodiments, the closure can be attached following the heat-sealing step of the thermoformed film parts.

The assembly methods described herein can provide shape and structure without requiring materials in addition to the one or two film parts described. The body of the vessel can be shaped by thermoforming, producing a structured body with a thin film. The body parts can then heat-sealed together and attached to a closure. The thermoforming process can produce a film that can be thinner in areas away from the perimeter or the heat-sealed regions of the vessel. This can allow the weight of the body to be reduced. The film at the perimeter of the film parts and at the site of closure attachment can be thick enough to allow for optimal heat-sealing or welding.

### Vessel Materials

Various materials can be used to form the vessels. The thickness, flexibility, and compressibility of the materials can also be adjusted or chosen. These characteristics can be adjusted to establish a desired flexibility or compressibility for the vessel walls. The materials can be food-grade for storage of consumable products. In an embodiment, the film to be thermoformed can be made from plastic. In some embodiments, the vessel can be made of an organically derived cellulosic material, a polymer, or any other liquid-impermeable material. In one embodiment, the vessel can be prepared from a mixture of nylon and polyethylene. Thermoplastic examples that can substitute for nylon include, but are not limited to, polycarbonate, polyester, PET, PVDC, polyvinylidene chloride, poly-4-methyl-1-pentene, polyphenylene sulfide and other higher temperature sealing thermoplastics. Thermoplastic examples that can substitute for polyethylene include, but are not limited to, other polyolefins, polyvinylchloride, ethylene vinyl acetate, polystyrene, polypropylene, polyisoprene, and other lower temperature sealing thermoplastics. In some embodiments, the liquid-holding vessel can comprise one type of material. This facilitates full recycling of the materials. In another embodiment, the liquid-holding vessel can be thermoformed from a coextruded film or a laminate of a number of films and comprise multiple types of materials. For example, the liquid-holding vessel can include a barrier layer that is laminated or applied to make a final film part or portion, such as EVOH layer, a metallic or metallized layer, a foil layer, or an aluminum oxide layer. In other embodiments, the liquid-holding vessel comprises significantly one type of material while another component such as a cap or tamper evident seal comprises a different material better suited to its purpose.

### EXAMPLES

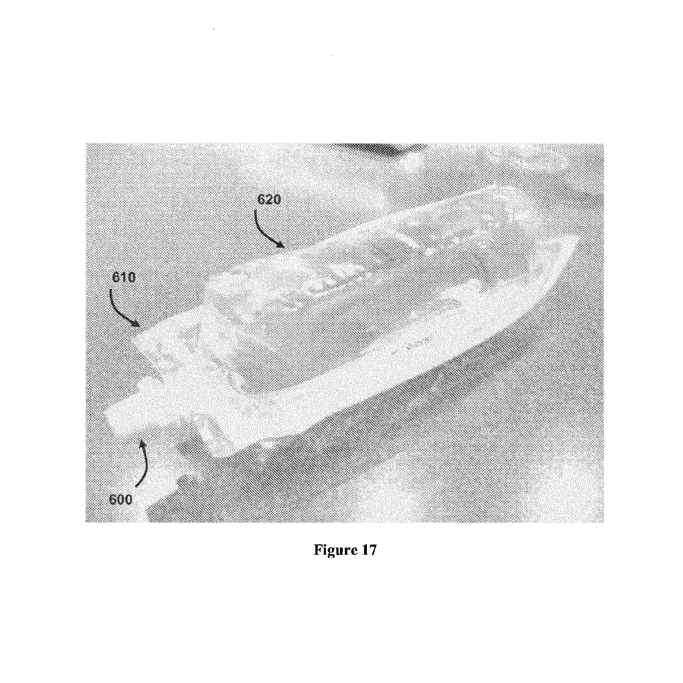

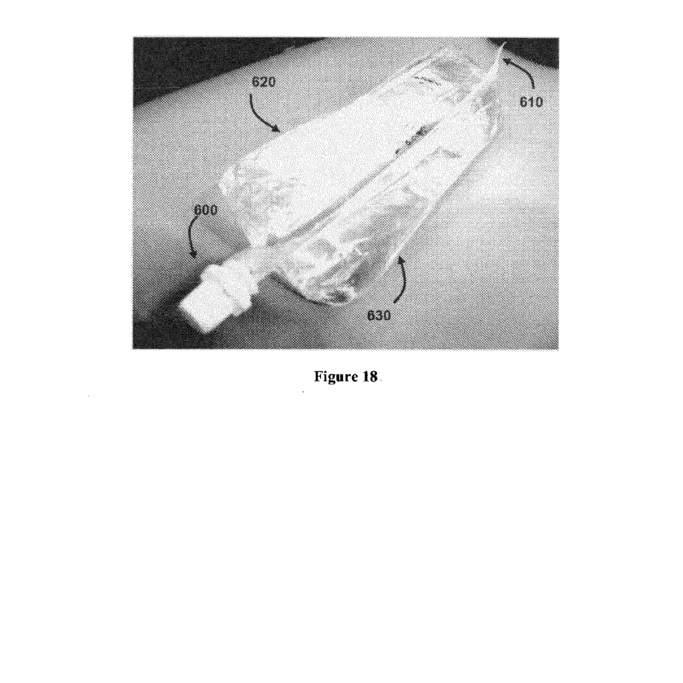

Fig. 17 and Fig. 18 show a prototype of a liquid-holding vessel prepared by heat-sealing two thermoformed film parts **620,** forming a seal seam **610.** A closure **600** is attached at one end of the vessel. Fig. 18 shows a side-profile of the prototype. Two thermoformed film parts **620, 630** and are heat-sealed at the perimeter **610** and fitted with a closure **600.**

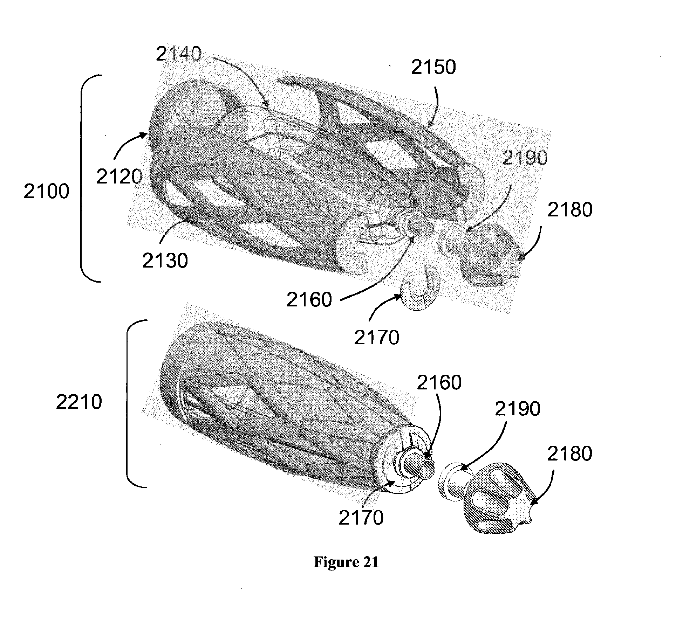

Fig. 21 shows two views of a liquid-holding vessel contained within a skeleton in an assembled **2210** and in an exploded view **2100.** The liquid-holding vessel includes a thermoformed liquid-holding vessel **2140** that is attached to a spout **2160** with a cap **2190.** The liquid-holding vessel is enclosed in a skeleton that is formed from multiple parts, including two side walls **2150** and **2130,** and an optional bottom cap **2120.** The skeleton also includes a clip **2170** that can help take up tolerances, be used to hold the skeleton together using friction or glue, or prevent rotation of the spout as the cap is removed. The cap can be attached to a gripping piece **2180** to aid in the removal of the cap.

## Claims

1. A vessel for holding a liquid comprising:
at least one thermoformed film portion (105; 110; 120; 310, 320; 580; 2140; 2280; 2310), wherein
the thermoformed film portion is sealable to form a vessel body for containing liquids;
a closure or fitment attached to the vessel body, wherein the closure or fitment is a weldspout fitment (130; 200; 590; 2160; 2330);
wherein the thermoformed film portion is supported by an outer-skeleton (400; 430; 2120, 2130, 2150; 2300); and
wherein the outer skeleton is formed of fiber, pulp, or paper.

2. The vessel of claim 1, wherein the thermoformed film portion has a three-dimensional form.

3. The vessel of claim 1, wherein the liquid-containing vessel is shaped to an interior cavity of the outer skeleton.

4. The vessel of claim 1, where the liquid-containing vessel is connected to the outer skeleton through the fitment or closure.

5. The vessel of claim 1, wherein said at least one thermoformed film portion is adhesively connected along its outer perimeter to the outer skeleton.

6. The vessel of claim 1 wherein the fiber or pulp or paper outer skeleton is provided as a clamshell arrangement.

7. The vessel of claim 1, where the perimeter of the thermoformed film portion is bonded, through the melting of the thermoformed film portion material itself, to the outer skeleton, forming a unified container.

8. The vessel of claim 1 wherein the thermoformed film portion is formed to an inside cavity of the outer skeleton and has three dimensional form.

9. The vessel of claim 1 wherein said closure or fitment is configured for communication of contents into or out of the thermoformed film portion, wherein the thermoformed film portion is connected to the outer skeleton by way of the closure or fitment.

10. The vessel of claim 1 wherein the outer skeleton comprises type-3 thermoformed fiber.

11. A method for containing a liquid comprising:
providing at least one thermoformed film portion;
sealing the thermoformed film portion to form a vessel body for containing liquids; and
attaching a closure or fitment to the vessel body, wherein the closure or fitment is a weldspout fitment; and
providing a fiber or pulp or paper outer skeleton.

12. The method of claim 11, comprising adhesively connecting the thermoformed film portion along its outer perimeter to the outer skeleton.

13. The method of claim 11, wherein said sealing step is performed by heat-sealing the thermoformed film portion along edges.

14. The method claim 11, wherein the weldspout fitment is of the face-sealing variety or is of the edge-sealing variety.

15. The method of claim 11, wherein (a) the thermoformed film portion is provided as a clamshell arrangement with a hinge and/or (b) the fiber or pulp or paper outer skeleton is provided as a clamshell arrangement.

## Patentansprüche

1. Gefäß zum Aufnehmen einer Flüssigkeit, aufweisend:
zumindest einen wärmegeformten Filmabschnitt (105; 110; 120; 310, 320; 580; 2140; 2280; 2310), wobei der wärmegeformte Filmabschnitt versiegelbar ist, um einen Gefäßkörper zum Aufnehmen von Flüssigkeiten zu bilden;
einen Verschluss oder einen Einsatz, der am Gefäßkörper befestigt ist, wobei der Verschluss oder Einsatz ein Weldspout-Einsatz (130; 200; 590; 2160; 2330) ist;
wobei der wärmegeformte Filmabschnitt von einem Außenskelett (400; 430; 2120, 2130, 2150; 2300) gehalten wird; und
wobei das Außenskelett aus Faser, Zellstoff oder Papier gebildet ist.

2. Gefäß nach Anspruch 1, wobei der wärmegeformte Filmabschnitt eine dreidimensionale Form aufweist.

3. Gefäß nach Anspruch 1, wobei das Flüssigkeitsaufnahmegefäß an einen inneren Hohlraum des Außenskeletts geformt ist.

4. Gefäß nach Anspruch 1, wobei das Flüssigkeitsaufnahmegefäß mit dem Außenskelett durch den Einsatz oder Verschluss verbunden ist.

5. Gefäß nach Anspruch 1, wobei der zumindest eine wärmegeformte Filmabschnitt entlang seinem äußeren Umfang an das Außenskelett geklebt ist.

6. Gefäß nach Anspruch 1, wobei das Außenskelett aus Faser oder Zellstoff oder Papier als Schalenanordnung bereitgestellt ist.

7. Gefäß nach Anspruch 1, wobei der Umfang des wärmegeformten Filmabschnitts durch Schmelzen des thermogeformten Filmabschnittmaterials selbst an das Außenskelett gebunden ist, wodurch ein einheitlicher Behälter gebildet ist.

8. Gefäß nach Anspruch 1, wobei der wärmegeformte Filmabschnitt an einem inneren Hohlraum des Außenskeletts gebildet ist und eine dreidimensionale Form hat.

9. Gefäß nach Anspruch 1, wobei der Verschluss oder Einsatz zum Leiten des Inhalts in und aus dem wärmegeformten Filmabschnitt gestaltet ist, wobei der wärmegeformte Filmabschnitt mit dem Außenskelett durch den Verschluss oder Einsatz verbunden ist.

10. Gefäß nach Anspruch 1, wobei das Außenskelett wärmegeformte Faser vom Typ 3 aufweist.

11. Verfahren zum Aufnehmen einer Flüssigkeit, aufweisend:
Bereitstellen zumindest eines wärmegeformten Filmabschnitts;
Verschließen des wärmegeformten Filmabschnitts, um einen Gefäßkörper zum Aufnehmen von Flüssigkeiten zu bilden; und
Anbringen eines Verschlusses oder Einsatzes an dem Gefäßkörper, wobei der Verschluss oder Einsatz ein Weldspout-Einsatz ist; und
Bereitstellen eines Außenskeletts aus Faser oder Zellstoff oder Papier.

12. Verfahren nach Anspruch 11, umfassend ein Ankleben des wärmegeformten Filmabschnitts entlang seines Außenumfangs an das Außenskelett.

13. Verfahren nach Anspruch 11, wobei der Versiegelungsschritt durch Wärmeversiegeln des wärmegeformten Filmabschnitts entlang Rändern durchgeführt wird.

14. Verfahren nach Anspruch 11, wobei der Weldspout-Einsatz von der Flächenversiegelungsart oder von der Randversiegelungsart ist.

15. Verfahren nach Anspruch 11, wobei (a) der wärmegeformte Filmabschnitt als Schalenanordnung mit einem Gelenk bereitgestellt ist und/oder (b) das Außenskelett aus Faser oder Zellstoff oder Papier als Schalenanordnung bereitgestellt ist.

## Revendications

1. Cuve pour contenir un liquide, comprenant:
au moins une partie de film thermoformée (105; 110; 120; 310, 320; 580; 2140; 2280; 2310), dans laquelle la partie de film thermoformée peut être scellée pour former un corps de cuve pour contenir des liquides;
une fermeture ou un accessoire qui est attaché(e) au corps de cuve, dans laquelle la fermeture ou l'accessoire est un accessoire de bec de soudure (130; 200; 590; 2160; 2330);
dans laquelle la partie de film thermoformée est supportée par une ossature extérieure (400; 430; 2120, 2130, 2150; 2300); et
dans laquelle l'ossature extérieure est constituée de fibre, de pâte ou de papier.

2. Cuve selon la revendication 1, dans laquelle la partie de film thermoformée présente une forme tridimensionnelle.

3. Cuve selon la revendication 1, dans laquelle la cuve contenant du liquide est configurée en une cavité intérieure de l'ossature extérieure.

4. Cuve selon la revendication 1, dans laquelle la cuve contenant du liquide est connectée à l'ossature extérieure par l'intermédiaire de l'accessoire ou de la fermeture.

5. Cuve selon la revendication 1, dans laquelle ladite au moins une partie de film thermoformée est connectée de façon adhésive le long de son périmètre extérieur à l'ossature extérieure.

6. Cuve selon la revendication 1, dans laquelle l'ossature extérieure de fibre ou de pâte ou de papier est formée comme un agencement de blister double coque.

7. Cuve selon la revendication 1, dans laquelle le périmètre de la partie de film thermoformée est lié, par la fusion de la matière de la partie de film thermoformée elle-même, sur l'ossature extérieure, formant une récipient unifié.

8. Cuve selon la revendication 1, dans laquelle la partie de film thermoformée est formée sur une cavité intérieure de l'ossature extérieure et présente une forme tridimensionnelle.

9. Cuve selon la revendication 1, dans laquelle ladite fermeture ou ledit accessoire est configuré(e) pour une communication du contenu dans ou hors de la partie de film thermoformée, dans laquelle la partie de film thermoformée est connectée à l'ossature extérieure au moyen de la fermeture ou de l'accessoire.

10. Cuve selon la revendication 1, dans laquelle l'ossature extérieure comprend une fibre thermoformée de type 3.

11. Procédé pour contenir un liquide, comprenant les étapes suivantes:
fournir au moins une partie de film thermoformée;
sceller la partie de film thermoformée afin de former un corps de cuve pour contenir des liquides; et
attacher une fermeture ou un accessoire au corps de cuve, dans lequel la fermeture ou l'accessoire est un accessoire de bec de soudure; et
fournir une ossature extérieure de fibre ou de pâte ou de papier.

12. Procédé selon la revendication 11, comprenant la connexion adhésive de la partie de film thermoformée le long de son périmètre extérieur à l'ossature extérieure.

13. Procédé selon la revendication 11, dans lequel ladite étape de scellage est exécutée en thermoscellant la partie de film thermoformée le long des bords.

14. Procédé selon la revendication 11, dans lequel l'accessoire de bec de soudure est de la variété de scellage des faces ou de la variété de scellage des bords.

15. Procédé selon la revendication 11, dans lequel (a) la partie de film thermoformée est formée comme un agencement de blister double coque pourvu d'une charnière et/ou (b) l'ossature extérieure de fibre ou de pâte ou de papier est formée comme un agencement de blister double coque.
